# EUROPEAN PATENT APPLICATION

(11) **EP 3 637 049 A1**
(43) Date of publication of application: **15.04.2020**
(21) Application number: 19202703.5
(22) Date of filing: 11.10.2019
(51) Int. Cl.: G01C 7/04, G01C 15/00, G01S 17/86, G01S 17/89

(54) **MOBILE SURFACE SCANNER AND ASSOCIATED METHOD**

(30) Priority: 12.10.2018 US 201862745159 P; 10.10.2019 US 201916598771
(71) Applicant: ID Technologies Inc., Calgary, AB T2H 2Z9 (CA)
(72) Inventor: Agouridis, Dimitris, Calgary, AB T2H 2Z9 (CA); Mufti, Muid, Calgary, AB T2H 2Z9 (CA)
(74) Representative: Betten & Resch

(57) **Abstract**

A mobile surface scanner and associated method are disclosed. The mobile surface scanner comprises an array of laser scanners that determine surface conditions within a selected land area.

The surface data is processed and imported into a geographic information system application, where the surface conditions are visualized on a map of the selected land area.

## Description

### PRIORITY CLAIM

This application claims priority to U.S. Provisional Patent Application No. 62/745,159, filed on October 12, 2018, and titled "'Xero' Sidewalk Scanner," which is incorporated by reference herein.

### FIELD OF THE INVENTION

A mobile surface scanner and associated method are disclosed.

### BACKGROUND OF THE INVENTION

Local governments and maintenance crews frequently monitor the surface condition of streets, sidewalks, handicap ramps, and other public works to identify any structures that need repair. They largely rely upon visual inspections by human beings. For examples, pot holes in streets often are first identified by a citizen who calls or emails the government. In some instances, maintenance crews will drive or walk through local areas to inspect the condition of the public works. Crews will sometimes capture photos or video as they traverse the area, which provides the option for others to later view the photos or video to look for items that need repair These prior art methods are slow, tedious, and inefficient. For example, there is no mechanism by which the crew that identifies the damaged structure can provide the precise location of the damaged area to the crew that ultimately is asked to repair the structure.

The prior art also includes geographic information system (GIS) applications, which are software applications that can display a map of a particular land area along with features of interest, such as natural terrain, streets, pipes, sidewalks, etc. GIS applications are commonly used to design streets, sidewalks, traffic light placement, etc. To date, GIS applications do not have an automated way to identify locations on the map where repairs are needed.

What is needed is an improved device and method for identifying imperfections in the surface conditions of existing structures within a land area of interest, such as streets, sidewalks, handicap ramps, and other structures. What is further needed is the ability to visualize the surface conditions within a GIS application so that a user may view the location where repairs are needed on a map of the area.

### SUMMARY OF THE INVENTION

A mobile surface scanner and associated method are disclosed. The mobile surface scanner comprises an array of laser scanners that determine surface conditions within a selected land area. The surface data is processed and imported into a geographic information system application, where the surface conditions are visualized on a map of the selected land area.

In one embodiment, a mobile surface scanner comprises a frame; wheels attached to the frame; a positioning unit attached to the frame for generating position data indicating the position of the positioning unit; one or more scanners, each scanner configured to emit a laser toward a surface under the mobile surface scanner and to measure laser light reflected from the surface to the scanner to generate surface data; and a computing device for storing the surface data and the position data.

In another embodiment, a surface scanning method comprises generating, by a mobile surface scanner, surface data for a surface of a land area; generating, by a positioning unit, position data for the mobile surface scanner; generating, by a computing device, a data structure based on the surface data and the position data; and displaying, by a geographic information system application, a visualization of the surface data over a map of the land area.

### BRIEF DESCRIPTION OF THE DRAWINGS

Figure 1 depicts a mobile surface scanner.
Figure 2 depicts prior art hardware components of a computing device used in the mobile surface scanner.
Figure 3 depicts software components of the computing device used in the mobile surface scanner.
Figure 4 depicts a surface scanning method.
Figure 5 depicts raw data visualization generated based on surface data collected by the mobile surface scanner.
Figure 6 depicts a visualization of surface data collected by the mobile surface scanner integrated into a GIS application.
Figure 7 depicts a visualization of surface data collected by the mobile surface scanner integrated into a GIS application, with notes and a photo for a particular location.
Figure 8 depicts the computing device communicating with a server and/or another computing device over a network.

### DETAILED DESCRIPTION OF THE INVENTION

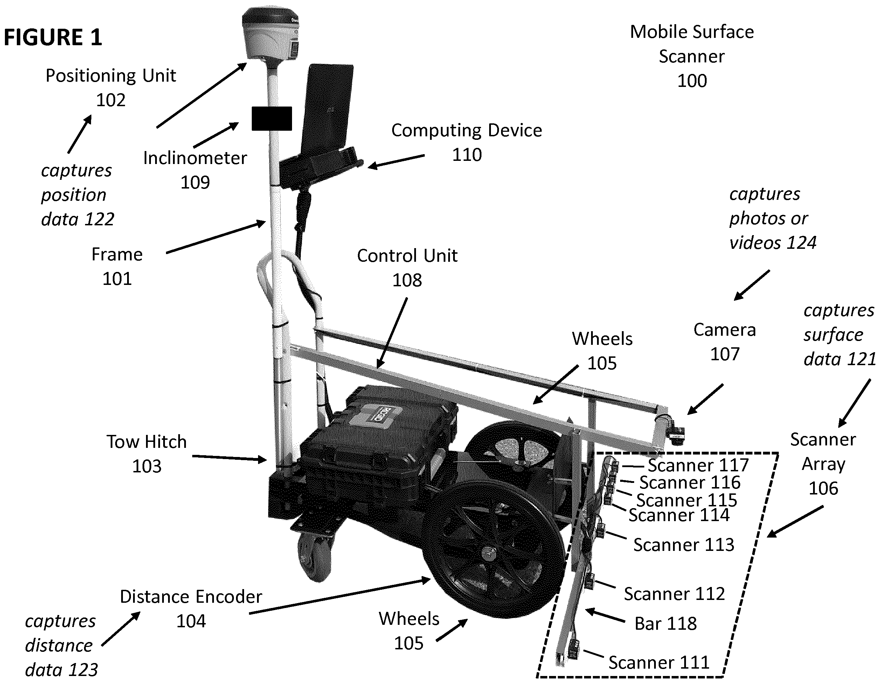

Figure 1 depicts mobile surface scanner 100. Mobile surface scanner 100 comprises frame 101, position unit 102, tow hitch 103, distance encoder 104, wheels 105, scanner array 106, camera 107, control unit 108, inclinometer 109, and computing device 110.

Positioning unit 102 comprises a GPS unit or GNSS unit that communicates with GPS or GNSS satellites to determine latitude and longitude coordinates for mobile surface scanner 100 (and specifically for positioning unit 102) and generates position data 122, preferably in the form of latitude data and longitude data. Distance encoder 104 measures the distance travelled based on movement of wheels 105 or a structure connected to wheels 105, such as an axle (not shown), and outputs distance data 123. Camera 107 captures photos and/or video 124. Control unit 108 comprises a battery (not shown) that provides power to computing device 110, distance encoder 104, scanner array 106, and camera 107. Optionally, control unit 108 also can create a wireless or wired network by which computing device 110, positioning unit 102, distance encoder 104, camera 107, and scanner array 106 can communicate with one another. Inclinometer 109 measures angles of slope (or tilt), elevation, or depression of mobile surface scanner 100, and indirectly, the surface being analyzed, with respect to gravity's direction. Scanner array 106 comprises an array of scanners, here shown as scanners 111, 112, 113, 114, 115, 116, and 117. Each scanner in scanner array 106 is coupled to bar 118, which is part of frame 101 or is attached to frame 101. The position of each scanner along bar 118 can be adjusted.

Each scanner in scanner array 106 comprises a laser and a photo diode or similar device. During operation, the scanner will emit laser light from the laser, some of the light will hit the surface in front of the scanner (e.g., the sidewalk or street being traversed), and some of that light will reflect back to the scanner and will be collected by the photo diode. Changes over time (and distance travelled by mobile surface scanner 100) will directly relate to changes in the condition of the surface. For example, if the surface contains a crack, there will be a profile change, such as a distinct change in the amount of light collected from reflections off of the surface.

Optionally, each scanner in scanner array 106 can modulate its laser light using a different frequency than the other scanners, so that each scanner can identify reflected light that emanated from it and can identify and ultimately filter out from its output any reflected light received from a different scanner.

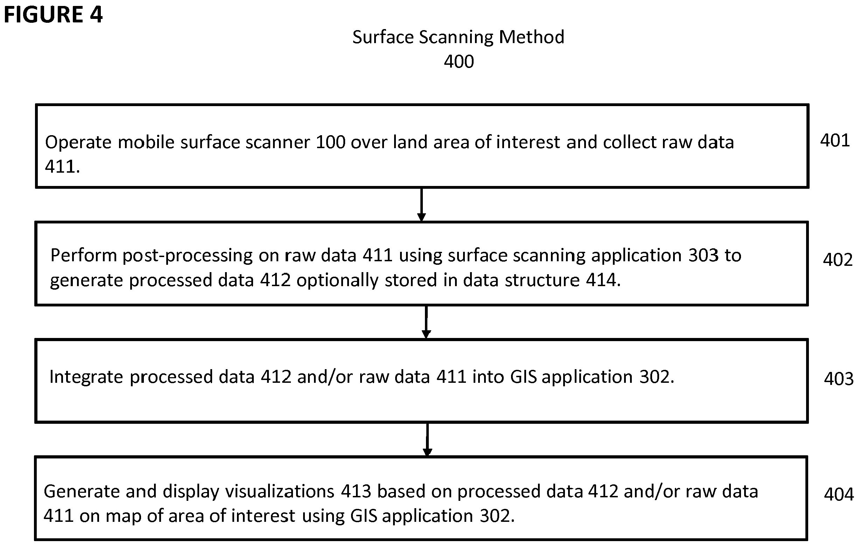

Thus, scanner array 106 is able to collect surface data 121 that indicates the surface profile of any pavement, sidewalk, or other surface that mobile surface scanner 100 traverses. Surface data 121 can be associated with position data 122 collected by positioning unit 102, such as latitude and longitude data for the exact point at which a particular set of data is collected. Surface data 121, along with position data 122, distance data 123, and photos or videos 124, can collectively be referred to as raw data 411 (discussed further below with reference to Figure 4).

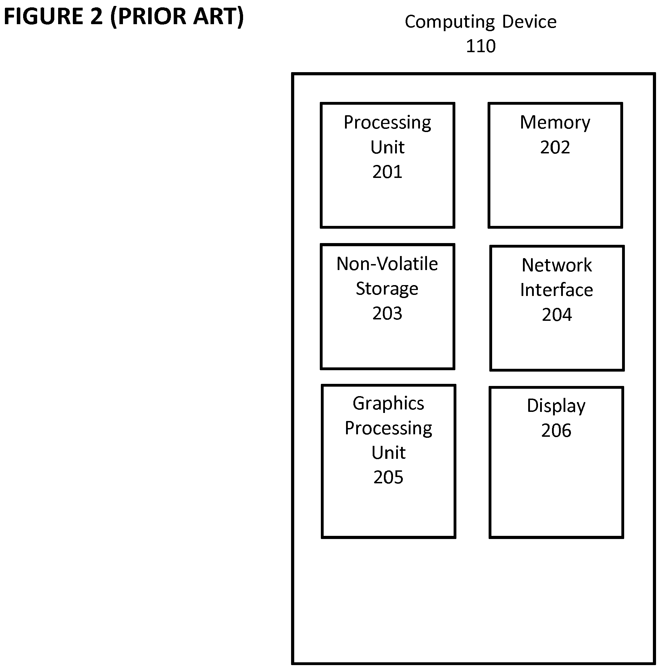

Each scanner in scanner array 106 is coupled to network interface 204 (discussed below with reference to Figure 2) in computing device 110 directly by a wired or wireless connection, or indirectly through a wired or wireless network established by control unit 108. Raw data 411 can then be processed by surface scanning application 303 and then uploaded into GIS application 302 as single point geolocation data or as a full path definition.

Figure 2 depicts hardware components of computing device 110. These hardware components are known in the prior art. Computing device 110 comprises processing unit 201, memory 202, non-volatile storage 203, network interface 204, graphics processing unit 205, and display 206. Computing device 110 can be a smartphone, notebook computer, tablet, desktop computer, gaming unit, wearable computing device such as a watch or glasses, a TS, or any other computing device.

Processing unit 201 optionally comprises a microprocessor with one or more processing cores. Memory 202 optionally comprises DRAM or SRAM volatile memory. Non-volatile storage 203 optionally comprises a hard disk drive or flash memory array. Network interface 204 optionally comprises a wired interface (e.g., Ethernet interface) or wireless interface (e.g., 3G, 4G, 5G, GSM, 802.11, protocol known by the trademark "BLUETOOTH," etc.). Graphics processing unit 205 optionally comprises a controller or processor for generating graphics for display 206. Display 206 displays the graphics generated by graphics processing unit 201, and optionally comprises a monitor, touchscreen, or other type of display.

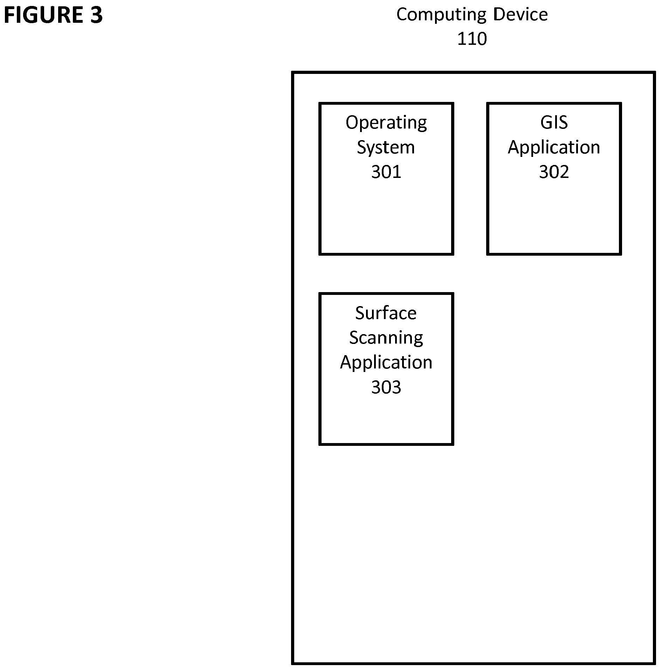

Figure 3 depicts software components of computing device 110. Computing device 110 comprises operating system 301, geographic information system (GIS) application 302, and surface scanning application 303.

Operating system 301 is one of the known operating systems operated on computing devices, such as the operating systems known by the trademarks "WINDOWS," "LINUX," "ANDROID," "IOS," or others.

GIS application 302 is one of the known GIS software applications that exist in the prior art, such as the GIS applications known by the trademarks "ARCGIS," "GOOGLE MAPS," and "AUTOCAD,"

Surface scanning application 303 comprises lines of software code executed by processing unit 101 to perform the functions described herein. Surface scanning application 303 forms an important component of the inventive aspect of the embodiments described herein, and surface scanning application 303 is not known in the prior art.

Figure 4 depicts surface scanning method 400 that utilizes mobile surface scanner 100.

The first step is to operate mobile surface scanner 100 over a land area of interest (step 401). A person takes mobile surface scanner 100 to the area of interest and traverses the area. It can be appreciated that scanner array 106 is able to capture surface data 121 (which is a component of raw data 411) from a surface area approximately as wide as the width between scanner 111 and scanner 117 on bar 118. For example, this might be a three-foot distance. The person therefore must walk with mobile surface scanner 100 across the area and collect data for one "strip" or surface at a time. If the user wishes to collect data for a sidewalk that is six feet wide, the user would need to walk along the length of the sidewalk at least twice to collect data for the entirety of the sidewalk.

Raw data 411 is collected. Specifically, surface data 121 is captured by scanner array 106 and transmitted to computing device 110. Similarly, positioning unit 102 collects position data 122 (e.g., latitude and longitude data) and provides it to computing device 110 in real-time. Camera 107 provides photos or video 124 to computing device 10, and distance encoder 104 provides distance data 123 to computing device 110.

The second step is to perform post-processing on raw data 411 using surface scanning application 303 to generate processed data 412 (step 402). This might include, for example, associating positioning data 122 from positioning unit 102 with surface data 121 from scanner array 106, distance data 123 from distance encoder 104, and photos or videos 124 from camera 107. Processed data 412 optionally can be stored within data structure 414 (for example, as data in a table in a database or as XML file).

The third step is to integrate processed data 412 and/or raw data 411 into GIS application 302 (step 403). The processed data 412 and/or raw data 411 can be imported into GIS application 302 the data as single point geolocation data or as a full path definition..

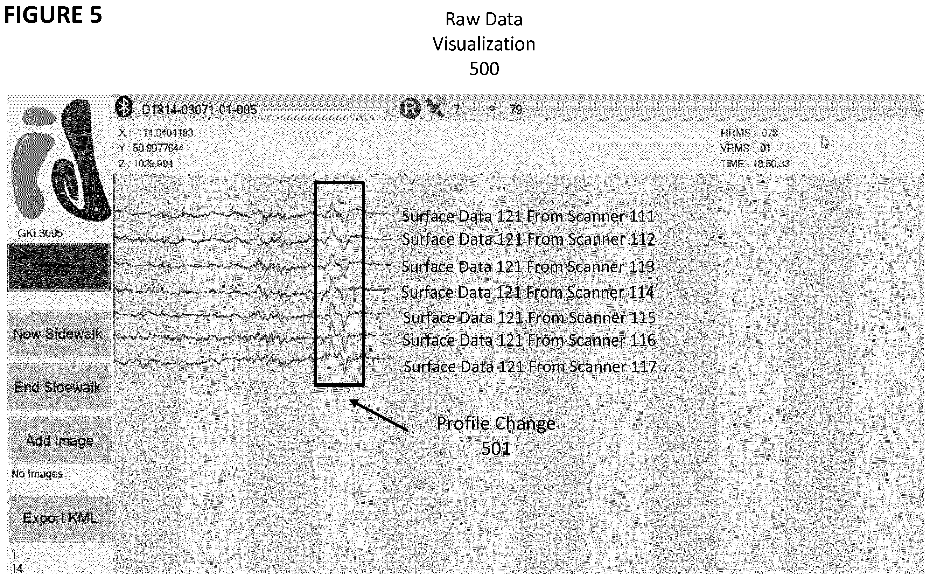

The fourth step is to generate and display visualizations of surface features on a map of the area of interest using GIS application 302 (step 404). Examples of visualizations will be described with reference to Figures 5-7.

Figure 5 depicts raw data visualization, which displays surface data 121 (a component of raw data 411) collected from each scanner in scanner array 106. Here, a graph is shown for the portion of surface data 120 obtained by each of data scanners 111, 112, 113, 114, 115, 116, and 117. In this particular example, there is an abrupt shift in surface data 120 as indicated as profile change 511. Profile change 511 likely resulted from a crack in the pavement or sidewalk. When a profile change such as profile change 511 is detected, optionally: (1) camera 107 can automatically take a photo or video; (2) computing device 110 can generate an alert (such as a message or a beep) at the time profile change 511 is detected so that the user can visually inspect the surface characteristic that caused profile change 511; and/or (3) the user optionally can input a note using computing device 110, which surface scanning application 303 will then associate with the particular position data 122 for the location corresponding to the point at which the note is entered.

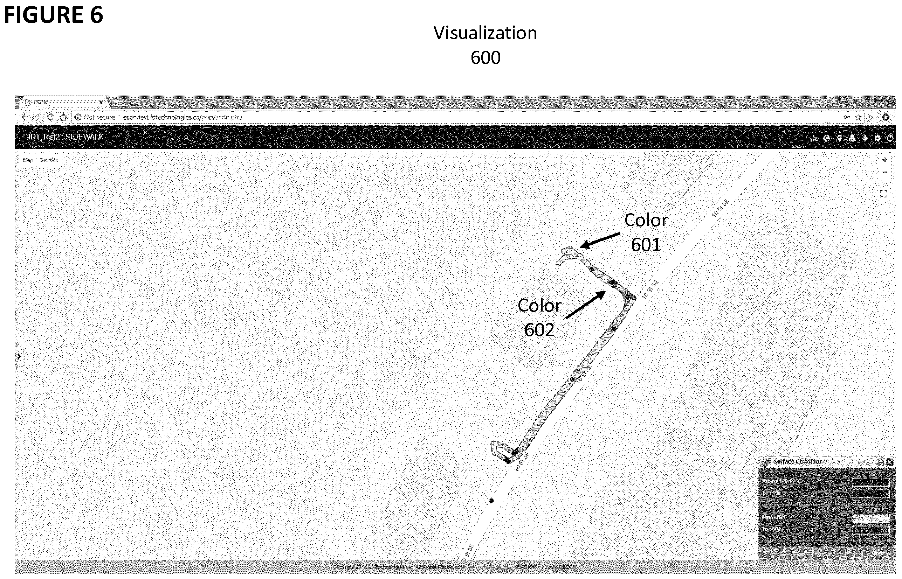

Figure 6 depicts visualization 600, which is generated by GIS application 302. Here, all of the raw data 411 collected by mobile surface scanner 100 is transformed into processed data 412, optionally stored in data structure 414, that can be represented as a layer in GIS application 302, with different ranges of data represented by different colors. Here, any data corresponding to a profile change such as profile change 511 is indicated by color 602 (e.g., red), and all other data is indicated by color 601 (e.g., yellow). In this way, a user can quickly see in visualization 600 where imperfections exist that might need to be repaired to by maintenance crews.

Optionally, GIS application 302 can generate an alert (such as a textual or graphic message or sound) or use a different color in visualization 600 if a profile change 511 is detected for a specific location of interest, such as a handicap ramp of a sidewalk. More generally, GIS application 302 can identify risk areas for handicapped people. For example, GIS application 302 can identify sidewalks that do not have ramps, or sidewalks that are narrower than the average width of a wheelchair, or sidewalks that have major anomalies such as a large crack.

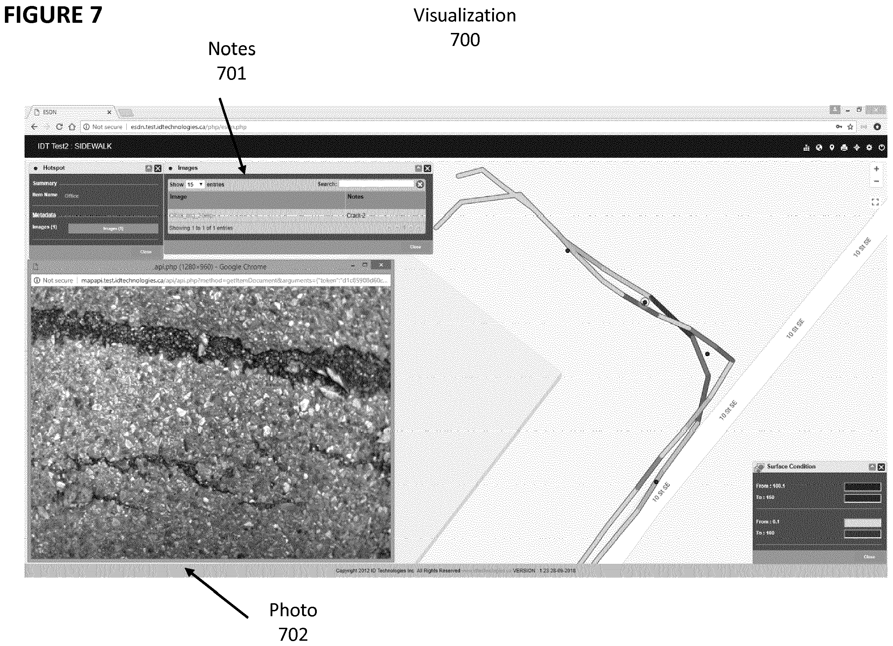

Figure 7 depicts visualization 700, which is generated by GIS application 302. Figure 7 is similar in content to Figure 6, with the addition of photo 702 and notes 701 which optionally can be displayed if a user selects an area within visualization 700 that corresponds to the phot 702 and notes 701. This would be useful, for example, if the users wishes to learn more detail about a specific location that was indicated by color 602. GIS application 302 then will display any photo 702 or notes 701 that were captured in the field for that particular location.

In the examples discussed above, computing device 110 operates GIS application 302 and surface scanning application 303. It can be appreciated that raw data 411 and processed data 412 and the visualizations of Figures 5-7 can be generated by one or more other computing devices or servers.

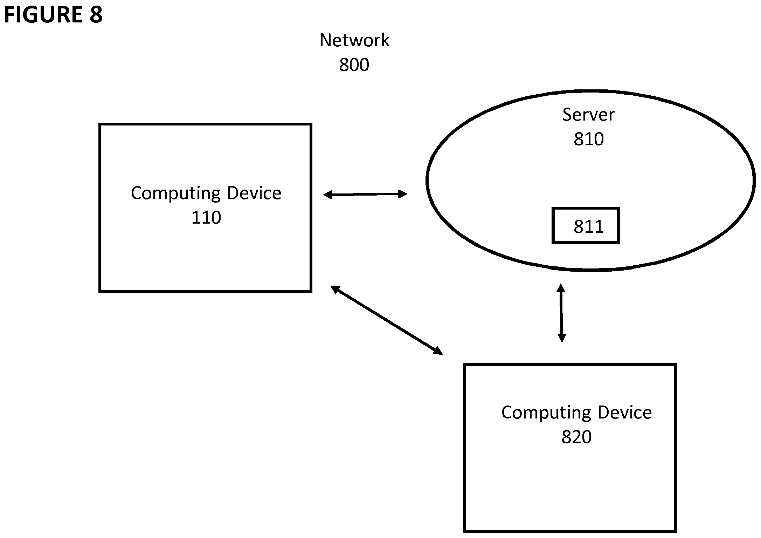

With reference to Figure 8, computing device 110 can communicate with server 810 over network 800, which comprises wired and/or wireless links. Computing device 110 can communicate directly with computing device 120 or indirectly with computing device 120 through server 810. The actions described herein optionally can be performed by computing device 110 on its own or by any combination of computing device 110, server 810, and computing device 120.

For instance, computing device 110 can collect raw data 411 and transfer raw data 411 to server 810 and/or computing device 120 (each of which executes surface scanning application 303 and/or GIS application 302, and each of which can contain the same or similar hardware and software as computing device 110 as shown in Figures 2 and 3) which then performs steps 402, 403, and 404 of surface scanning method 400. Or in an alternative approach, computing device 110 can collect raw data 411 and generate processed data 412 and optionally data structure 414 using surface scanning application 303, and processed data 412 can be provided to server 810 and/or computing device 820, which can then perform steps 403 and 404 of surface scanning method 400. Or in another alternative approach, computing device 110 can collect raw data 411 and generate processed data 412 using surface scanning application 303, and processed data 412 can be provided to server 810, which can then perform step 403 of surface scanning method 400, after which computing device 820 or any number of other computing devices performs step 404 of surface scanning method 400.

In addition, server 810 can provide additional functionality as well. For example, server 810 can execute work order management module 811 (which comprises lines of software code executed by a processing unit of server 810) that automatically generates repair orders if an anomaly is detected that exceeds a certain threshold or that meets certain criteria (for example, a pothole that is deeper than X centimeters or wider than Y centimeters at its largest extent).

It can be further appreciated that mobile surface scanner 100 or components thereof can be combined with other types of vehicles or mobile units, such as cars, wheelchairs, or drones. The same hardware and software components described above for mobile surface scanner 100 can be installed on those other types of vehicles or mobile units, and those vehicles or mobile units can then be used to perform surface scanning method 400. For example, mobile surface scanner 100 can be mounted on a car, and scanner array 106 can be made large enough to span an entire street or a substantial portion of the street, so that mobile surface scanner 100 can capture data for the entire street in one pass or a small number of passes. This would enable potholes and other dangerous anomalies on the street to be located extremely quickly.

Optionally, mobile surface scanner 100 could be mounted on a snow plow so that the condition of the street can be immediately determined after snow is plowed from the street.

It should be noted that, as used herein, the terms "over" and "on" both inclusively include "directly on" (no intermediate materials, elements or space disposed therebetween) and "indirectly on" (intermediate materials, elements or space disposed therebetween). Likewise, the term "mounted to" includes "directly mounted to" (no intermediate materials, elements or space disposed there between) and "indirectly mounted to" (intermediate materials, elements or spaced disposed there between), and "coupled" includes "directly coupled to" (no intermediate materials or elements therebetween that connect the elements together) and "indirectly coupled to" (intermediate materials or elements therebetween that connect the elements together).

## Claims

1. A mobile surface scanner, comprising:
a frame;
wheels attached to the frame;
a positioning unit attached to the frame for generating position data indicating the position of the positioning unit;
one or more scanners, each scanner configured to emit laser light toward a surface under the mobile surface scanner and to measure light reflected from the surface to the scanner to generate surface data; and
a computing device for storing the surface data and the position data.

2. The mobile surface scanner of claim 1, wherein the computing device operates a surface scanning application for generating a visualization of the surface data, wherein the visualization indicates any profile changes in the surface.

3. The mobile surface scanner of claim 1 or 2, wherein the computing device operates a geographic information system that generates a visualization based on the surface data and the position data over a map of the area in which the surface data was generated.

4. The mobile surface scanner of claim 3, wherein the visualization indicates the location of imperfections in a surface from which the surface data was generated.

5. The mobile surface scanner of claim 4, wherein the visualization comprises an indication of imperfections that satisfy predetermined characteristics.

6. The mobile surface scanner of claim 5, wherein the predetermined characteristics comprise accessibility for wheelchairs.

7. The mobile surface scanner of one of claims 1 to 6, further comprising:
a distance encoder for measuring distance travelled by the mobile surface scanner; and/or
further comprising:
a camera for capturing photos or videos; and/or
further comprising:
an inclinometer; and/or
wherein the position data comprises longitude data and latitude data.

8. A surface scanning method, comprising:
generating, by a mobile surface scanner, surface data for a surface of a land area;
generating, by a positioning unit, position data for the mobile surface scanner;
generating, by a computing device, a data structure based on the surface data and the position data; and
displaying, by a geographic information system application, a visualization based on the data structure over a map of the land area.

9. The method of claim 8, wherein the visualization indicates the location of imperfections in the surface.

10. The method of claim 9, wherein the visualization utilizes a first color for the imperfections and a second color for areas without imperfections.

11. The method of claim 10, wherein the visualization indicates the location of a crack in a sidewalk surface.

12. The method of claim 10 or 11, wherein the visualization indicates the location of a pothole in a street surface.

13. The method of one of claims 8 to 12, further comprising:
measuring, by a distance encoder, a distance travelled by the mobile surface scanner; and/or
further comprising:
capturing, by a camera on the mobile surface scanner, a photo or video of the surface; and/or
further comprising:
storing, by the computing device, text data entered by a user; and
associating the text data with position data.

14. The method of one of claims 8 to 13, further comprising:
uploading, by the computing device to a server, the data structure.

15. The method of claim 14, further comprising:
generating, by the server, one or more repair orders based on the data structure.
